# EUROPEAN PATENT SPECIFICATION

(11) **EP 3 992 072 B1**
(45) Date of publication and mention of the grant of the patent: **19.07.2023**
(21) Application number: 21189355.7
(22) Date of filing: 03.08.2021
(51) Int. Cl.: B62M 25/06, B62K 23/08, B62M 25/08, B62J 25/06, B62J 45/40, B62K 23/06

(54) **STRADDLED VEHICLE SHIFT PEDAL SENSOR**
SCHALTWELLENSENSOR EINES GRÄTSCHSITZFAHRZEUG
CAPTEUR D'ARBRE DE CHANGEMENT DE VITESSE D'UN VÉHICULE À ENFOURCHER

(30) Priority: 30.10.2020 JP 2020182691
(43) Date of publication of application: 04.05.2022
(73) Proprietor: Yamaha Hatsudoki Kabushiki Kaisha, Iwata-shi, Shizuoka 438-8501 (JP)
(72) Inventor: Kurosu, Hirotoshi, Iwata-shi, Shizuoka-ken, 438-8501 (JP); Horiuchi, Tomoki, Iwata-shi, Shizuoka-ken, 438-8501 (JP); Fukushima, Kenji, Iwata-shi, Shizuoka-ken, 438-8501 (JP)
(74) Representative: Grünecker Patent- und Rechtsanwälte PartG mbB

(56) References cited:
- EP-A1- 3 546 802
- JP-A- 2019 023 018

## Description

The present invention relates to a straddled vehicle according to the preamble of independent claim 1. Such a straddled vehicle can be taken from the prior art document JP 2019 023018 A.

As illustrated in FIG. 10 of JP5-26065A, for example, a straddled vehicle has been known that includes a shift pedal and a sensor for detecting the operation of the shift pedal, wherein upon detection of a shift pedal operation, the engine is controlled so that a gear shift of the transmission is performed smoothly. In this straddled vehicle, the shift pedal and the shift shaft of the transmission are linked together by a shift rod. The sensor is provided on the shift rod.

The straddled vehicle includes a side frame that is arranged sideward of the engine and extending downward. As the vehicle is seen from the side, a portion of the shift rod overlaps with the side frame. The shift rod extends from forward of the side frame to rearward of the side frame. The sensor is arranged forward relative to the side frame.

If a sensor that is waterproof (hereinafter referred to as a waterproof sensor) is used as the sensor for detecting the operation of the shift pedal, it is possible to run with no problems on bad terrains with many puddles, etc. However, a waterproof sensor is larger in size than a sensor that is not waterproof. Replacing the sensor of the straddled vehicle with a waterproof sensor, there may occur interference between the waterproof sensor and the side frame. Therefore, in order to avoid the side frame, one may consider arranging a waterproof sensor outward in the vehicle width direction relative to the position at which the sensor is arranged. This however increases the size around the shift pedal in the vehicle width direction.

It is an object of the present invention to provide a straddled vehicle including a waterproof sensor provided on the shift rod for detecting the operation of the shift pedal while suppressing an increase in size in the vehicle width direction. According to the present invention said object is solved by a straddled vehicle having the features of independent claim 1. Preferred embodiments are laid down in the dependent claims.

A straddled vehicle disclosed herein includes: an internal combustion engine; a side frame that is arranged sideward of the internal combustion engine and extending downward; a shift shaft provided on the internal combustion engine; a shift pedal; a shift rod that links together the shift shaft and the shift pedal; a waterproof sensor that is provided on the shift rod and detects contraction or extension of the shift rod; and a wire harness connected to the waterproof sensor. A portion of the shift rod overlaps with the side frame as the vehicle is seen from the side. The wire harness includes an overlap portion that overlaps with the side frame as the vehicle is seen from the side, and a rear portion that is located rearward of the overlap portion. At least a portion of the waterproof sensor is arranged rearward relative to the side frame. The overlap portion and the rear portion of the wire harness are arranged downward of the shift rod.

With the straddled vehicle described above, at least a portion of the waterproof sensor is arranged rearward relative to the side frame. The space rearward of the side frame is used as a space for installment for at least a portion of the waterproof sensor. The waterproof sensor is arranged relatively rearward, and the waterproof sensor and the side frame are unlikely to interfere with each other. This suppresses an increase in size of the straddled vehicle around the shift pedal in the vehicle width direction. Now, when the waterproof sensor is arranged relatively rearward, there may occur interference between the overlap portion and the rear portion of the wire harness and the shift rod. However, with the straddled vehicle described above, the overlap portion and the rear portion of the wire harness are arranged downward of the shift rod. Thus, it is possible to avoid such interference while suppressing an increase in size in the vehicle width direction. Therefore, with the straddled vehicle described above, the waterproof sensor can be used as a sensor provided on the shift rod while suppressing an increase in size in the vehicle width direction.

According to a preferred embodiment, the shift pedal includes a pedal support shaft that is rotatable up and down, a pedal arm that extends forward from the pedal support shaft, and a pedal operation shaft that extends outward in a vehicle width direction from the pedal arm. The waterproof sensor is arranged rearward relative to the pedal operation shaft.

According to the embodiment described above, the space rearward of the pedal operation shaft is used as a space for installment for the waterproof sensor. The waterproof sensor is arranged more rearward, thereby further suppressing an increase in size in the vehicle width direction.

The pedal operation shaft may overlap with the side frame as the vehicle is seen from the side.

According to a preferred embodiment, the waterproof sensor includes a sensor rod, and a mechanical switch that is turned ON/OFF through contact with the sensor rod.

According to the embodiment described above, since the waterproof sensor is a mechanical sensor, it is more inexpensive as compared with a case where the waterproof sensor is an optical sensor.

According to a preferred embodiment, the waterproof sensor includes a switch case housing the mechanical switch. The switch case is arranged rearward relative to the side frame.

According to the embodiment described above, since the mechanical switch is housed in the switch case while ensuring watertightness, the switch case will be relatively large. However, the switch case is arranged rearward relative to the side frame. This avoids interference between the switch case and the side frame, thereby suppressing an increase in size in the vehicle width direction.

According to a preferred embodiment, the switch case includes a connection port that is open forward. The wire harness is connected to the connection port.

According to the embodiment described above, the wire harness extends forward from the switch case, thereby avoiding a situation where the wire harness protrudes downward from the switch case. It is possible to arrange the wire harness in a compact arrangement.

According to a preferred embodiment, the overlap portion and the rear portion of the wire harness overlap with the shift rod as the vehicle is seen from above.

According to the embodiment described above, the overlap portion and the rear portion of the wire harness do not significantly protrude outward in the vehicle width direction relative to the shift rod. This suppresses an increase in size in the vehicle width direction.

According to a preferred embodiment, the straddled vehicle includes a fastening member that fastens the wire harness to the shift rod.

According to the embodiment described above, the wire harness can be made to conform to the shift rod. Therefore, the wire harness can be arranged in a compact arrangement.

According to a preferred embodiment, the straddled vehicle includes a hose-shaped harness cover in which the wire harness is inserted. The harness cover includes a portion that is arranged downward of the shift rod and overlaps with the shift rod as the vehicle is seen from above.

According to the embodiment described above, it is possible with the harness cover to protect the wire harness from gravel or mud kicked up from the road surface, or the foot of the rider, etc. Although the harness cover has a larger diameter than the wire harness, a portion of the harness cover downward of the shift rod is arranged directly under the shift rod, and does not significantly protrude outward in the vehicle width direction relative to the shift rod. This suppresses an increase in size in the vehicle width direction.

According to a preferred embodiment, the waterproof sensor is arranged outward in a vehicle width direction relative to the side frame and inward in the vehicle width direction relative to the shift pedal.

According to the embodiment described above, the waterproof sensor is arranged in a compact arrangement between the side frame and the shift pedal.

According to a preferred embodiment, the straddled vehicle includes a guard member that is arranged outward of the waterproof sensor in a vehicle width direction, overlaps with the waterproof sensor as the vehicle is seen from the side, and prevents a foot of a rider operating the shift pedal from hitting the waterproof sensor.

The waterproof sensor is arranged relatively rearward, and the foot of the rider may possibly hit the waterproof sensor when operating the shift pedal. According to the embodiment described above, however, the guard member prevents the foot of the rider from hitting the waterproof sensor.

According to a preferred embodiment, the straddled vehicle includes a side stand including a proximal portion that is supported so as to be rotatable up and down, and a distal portion. The side stand is configured to be rotatable between a standing position in which the distal portion is located downward of the proximal portion and a retracted position in which the distal portion is located rearward of the proximal portion. When the straddled vehicle is standing upright on a horizontal surface and the side stand is in the retracted position, the waterproof sensor is arranged upward relative to the side stand, rearward relative to the proximal portion of the side stand and forward relative to the distal portion of the side stand.

According to the embodiment described above, the waterproof sensor and the side stand can be arranged in a compact arrangement while avoiding interference therebetween.

According to a preferred embodiment, the straddled vehicle includes a side stand switch that is attached to the proximal portion of the side stand and detects a position of the side stand. The waterproof sensor is arranged rearward and upward of the side stand switch.

According to the embodiment described above, the waterproof sensor and the side stand switch can be arranged in a compact arrangement while avoiding interference therebetween.

According to a preferred embodiment, the straddled vehicle includes a footrest bracket that is secured on the side frame and arranged rearward of the side frame. The shift pedal is attached to the footrest bracket. The footrest bracket is arranged upward relative to the waterproof sensor and overlaps with at least a portion of the waterproof sensor as the vehicle is seen from above.

According to the embodiment described above, the waterproof sensor is arranged directly under at least a portion of the footrest bracket. The waterproof sensor does not significantly protrude outward in the vehicle width direction relative to the footrest bracket. This suppresses an increase in size in the vehicle width direction.

The straddled vehicle may include a controller connected to the wire harness. The controller may be configured to receive a signal from the waterproof sensor to perform a control of temporarily lowering an output power of the internal combustion engine.

The straddled vehicle may include: a pivot shaft supported on the side frame; and a rear arm pivotally linked to the side frame with the pivot shaft therebetween. The waterproof sensor may be arranged rearward relative to the pivot shaft.

According to a preferred embodiment, the waterproof sensor is configured to detect only one of contraction and extension of the shift rod.

According to the embodiment described above, the waterproof sensor can be made smaller as compared with a case where the waterproof sensor is configured to detect both contraction and extension of the shift rod. Therefore, it is possible to further suppress an increase in size in the vehicle width direction.

### Advantageous Effects Of Invention

According to the present invention, it is possible to provide a straddled vehicle including a waterproof sensor provided on the shift rod for detecting the operation of the shift pedal while suppressing an increase in size in the vehicle width direction.

### BRIEF DESCRIPTION OF THE DRAWINGS

FIG. 1 is a left side view of a motorcycle according to an embodiment.
FIG. 2 is a perspective view illustrating, extracted, main components of the motorcycle.
FIG. 3 is a left side view illustrating, extracted, main components of the motorcycle.
FIG. 4 is a plan view illustrating, extracted, main components of the motorcycle.
FIG. 5 is a front view illustrating, extracted, main components of the motorcycle.
FIG. 6 is a left side view of a sensor rod and a wire harness.

### DETAILED DESCRIPTION OF THE PREFERRED EMBODIMENTS

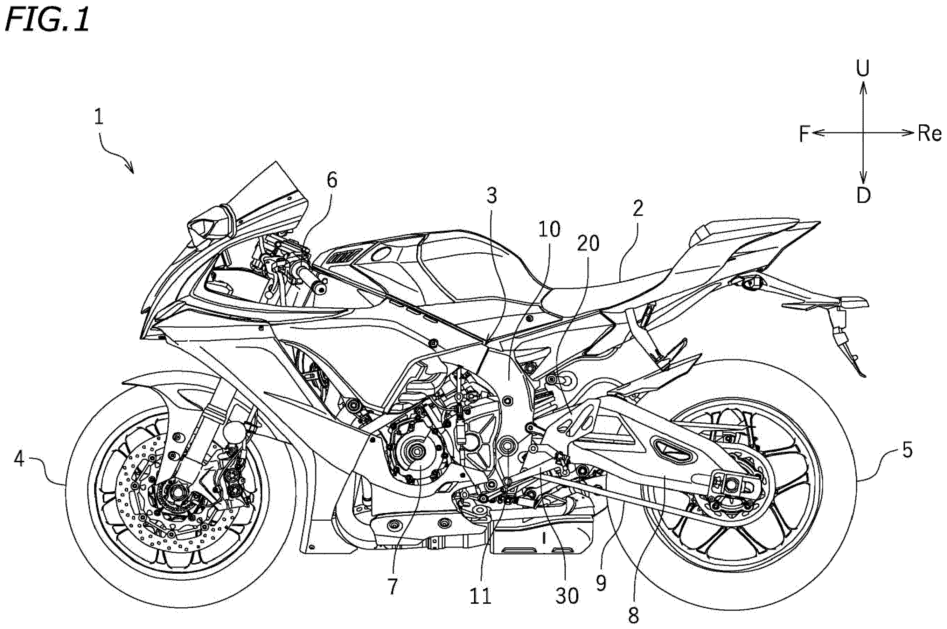

An embodiment will now be described with reference to the drawings. FIG. 1 is a left side view of a motorcycle 1, which is an example of a straddled vehicle.

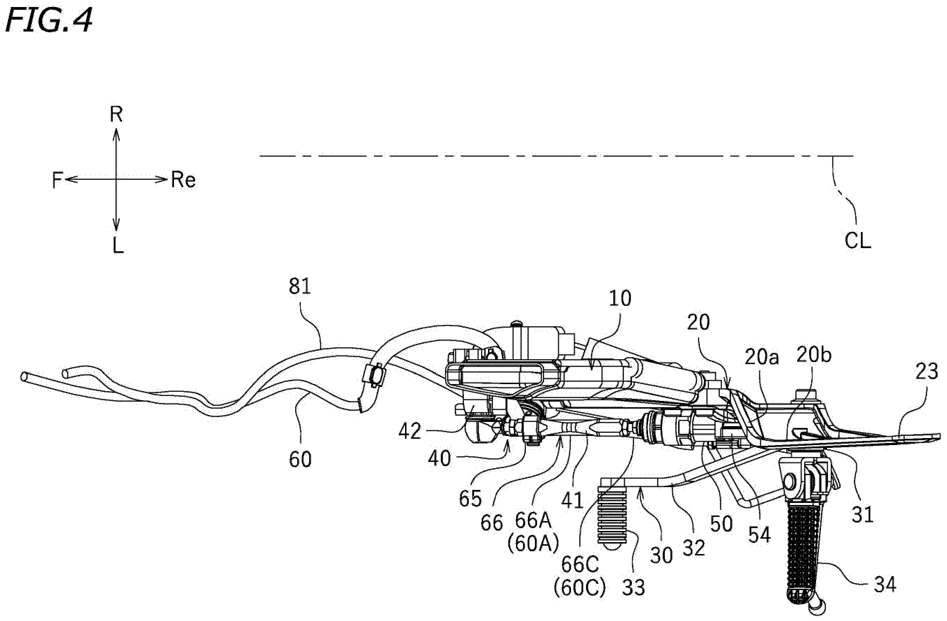

The terms front, rear, left, right, up and down, as used in the description below, refer to these directions as seen from a virtual rider seated on a seat 2 while the motorcycle 1 is standing upright on a horizontal surface with no rider and no load thereon, unless specified otherwise. The designations F, Re, L, R, U and D, as used in the figures, refer to front, rear, left, right, up and down, respectively. The term "front/forward" refers not only to the direction that extends in the front direction along the vehicle center line CL (see FIG. 4), as the vehicle is seen from above, but also to directions that are inclined left/right from that direction by an angle that is less than or equal to 45 degrees. Similarly, the term "rear/rearward" refers not only to the direction that extends rearward along the vehicle center line CL, as the vehicle is seen from above, but also to directions that are inclined left/right from that direction by an angle of 45 degrees of less. The term "left/leftward" refers not only to the direction that extends leftward vertical to the vehicle center line CL, as the vehicle is seen from above, but also to directions that are inclined frontward/rearward from that direction by an angle of 45 degrees of less. The term "right/rightward" refers not only to the direction that extends rightward vertical to the vehicle center line CL, as the vehicle is seen from above, but also to directions that are inclined frontward/rearward from that direction by an angle of 45 degrees of less. The term "up/upward" refers not only to the vertically upward direction, as the vehicle is seen from the side, but also to directions that are inclined frontward/rearward from that direction by an angle of 45 degrees of less. The term "down/downward" refers not only to the vertically downward direction, as the vehicle is seen from the side, but also to directions that are inclined frontward/rearward from that direction by an angle of 45 degrees of less. The vehicle left and right direction (L↔R), the vehicle up and down direction (U↔D) and the vehicle front and rear direction (F↔Re) refer to the main directions of the vehicle as indicated in the figures.

As shown in FIG. 1, the motorcycle 1 includes a vehicle body frame 3, the seat 2 supported on the vehicle body frame 3, a front wheel 4, a rear wheel 5, a handle bar 6 for steering the front wheel 4, and an internal combustion engine (hereinafter referred to as an engine) 7 for driving the rear wheel 5. The engine 7 is supported on the vehicle body frame 3.

The vehicle body frame 3 includes a left and right side frame 10 extending downward. The side frames 10 are arranged sideward of the engine 7. As shown in FIG. 1, the left side frame 10 is arranged leftward of the engine 7.

A pivot shaft 11 is supported on the side frame 10. A front end portion of a rear arm 8 is pivotally linked to the pivot shaft 11. The rear arm 8 is pivotally linked to the side frame 10 with the pivot shaft 11 therebetween. The rear wheel 5 is rotatably linked to a rear end portion of the rear arm 8. The engine 7 and the rear wheel 5 are linked together by a chain 9, which is an example of a power transmission member.

Although not shown in the figures, the engine 7 includes a stepped transmission. A shift shaft 16 of the transmission is provided on the engine 7. As the shift shaft 16 rotates, the gear of the transmission is changed. A portion of the shift shaft 16 is arranged outside the engine 7.

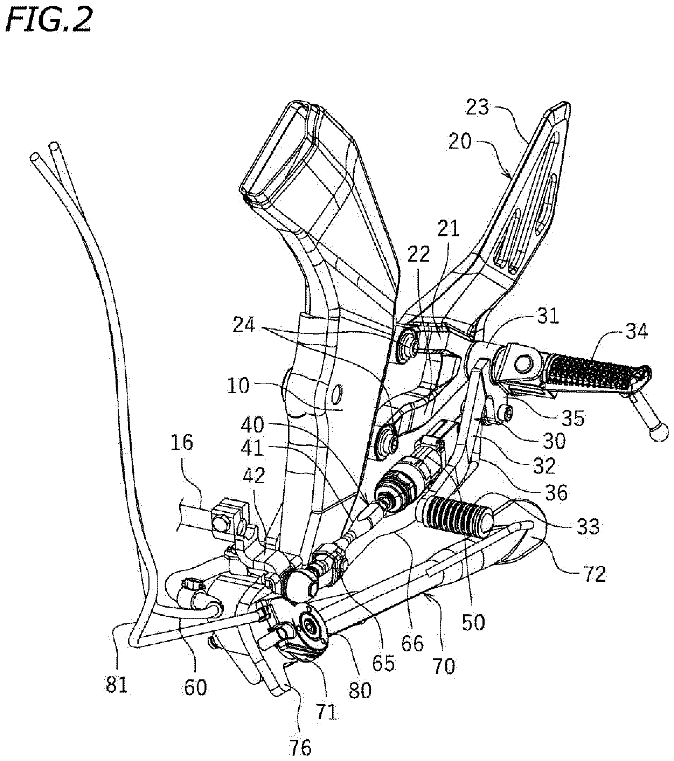

The motorcycle 1 includes a footrest bracket 20, a shift pedal 30 for operating the shift shaft 16, a shift rod 40 that links together the shift shaft 16 and the shift pedal 30, a wire harness 60, a side stand 70, and a side stand switch 80. FIG. 2, FIG. 3, FIG. 4 and FIG. 5 respectively show a perspective view, a left side view, a plan view and a front view of these components (hereinafter referred to as main components).

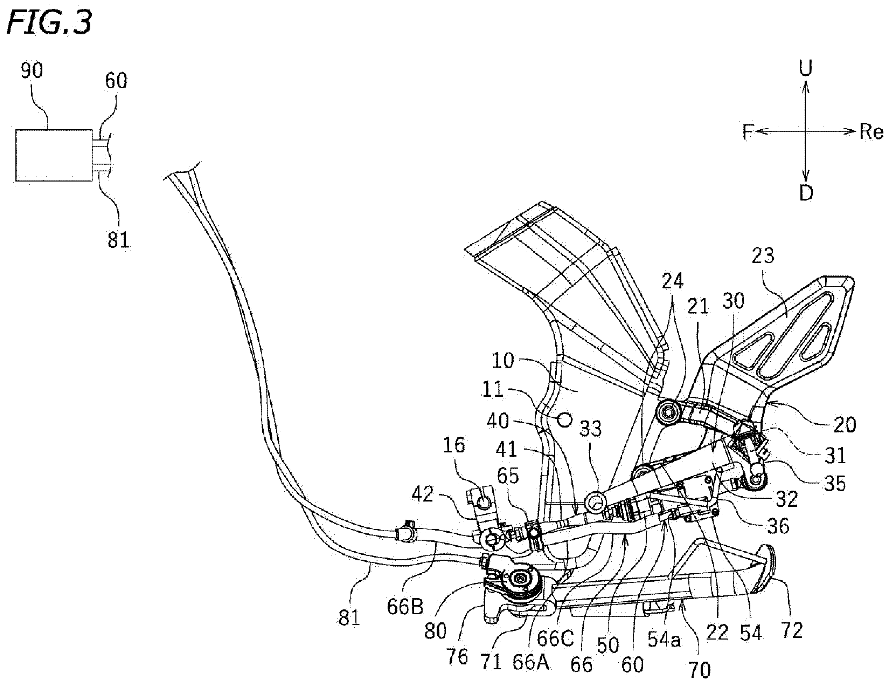

As shown in FIG. 2, the footrest bracket 20 is secured to the side frame 10 by bolts 24. The footrest bracket 20 is arranged rearward of the side frame 10. The footrest bracket 20 includes an upper arm 21, a lower arm 22 arranged downward of the upper arm 21, and a side cover 23. As shown in FIG. 3, the side cover 23 extends upward and rearward from the upper arm 21. As shown in FIG. 2, a front portion of the upper arm 21 and a front portion of the lower arm 22 are secured to the side frame 10 by the bolts 24. A rear portion of the upper arm 21 and a rear portion of the lower arm 22 are formed integral together. The side cover 23 is formed integral with the upper arm 21.

The shift pedal 30 is operated by a foot of the rider. The shift pedal 30 is attached to the footrest bracket 20. The shift pedal 30 includes a pedal support shaft 31 that is rotatable up and down, a pedal arm 32 that extends forward from the pedal support shaft 31, a pedal operation shaft 33 that extends leftward from the pedal arm 32, and a link arm 35 that extend downward from the pedal support shaft 31. The pedal operation shaft 33 extends outward in the vehicle width direction from the pedal arm 32. Note that "outward in the vehicle width direction" refers to the direction away from the vehicle center line CL (see FIG. 4). "Inward in the vehicle width direction" refers to the direction toward the vehicle center line. As shown in FIG. 3, the pedal operation shaft 33 overlaps with the side frame 10 as the vehicle is seen from the side. The pedal support shaft 31 is rotatably supported on the footrest bracket 20. As shown in FIG. 4, a footrest 34 is arranged outward in the vehicle width direction of the pedal support shaft 31. The footrest 34 is arranged leftward of the pedal support shaft 31 and extends leftward.

A foot of the rider rests on the footrest 34. The pedal operation shaft 33 is moved upward or downward by the toe of the foot of the rider. The shift pedal 30 is operated so that the pedal operation shaft 33 moves upward when shifting up, and is operated so that the pedal operation shaft 33 moves downward when shifting the gear down. In FIG. 3, the shift pedal 30 rotates clockwise about a center of the pedal support shaft 31 when shifting up, and rotates counterclockwise about the center of the pedal support shaft 31 when shifting down.

The shift rod 40 includes a main rod 41 and a waterproof sensor 50. A front end portion of the main rod 41 is linked to the shift shaft 16 with a link arm 42 therebetween. The shift shaft 16 is rotatably connected to an upper end portion of the link arm 42. The front end portion of the main rod 41 is rotatably connected to a lower end portion of the link arm 42. A rear end portion of the main rod 41 is connected to a front end portion of the waterproof sensor 50. A rear end portion of the waterproof sensor 50 is rotatably connected to the link arm 35 of the shift pedal 30.

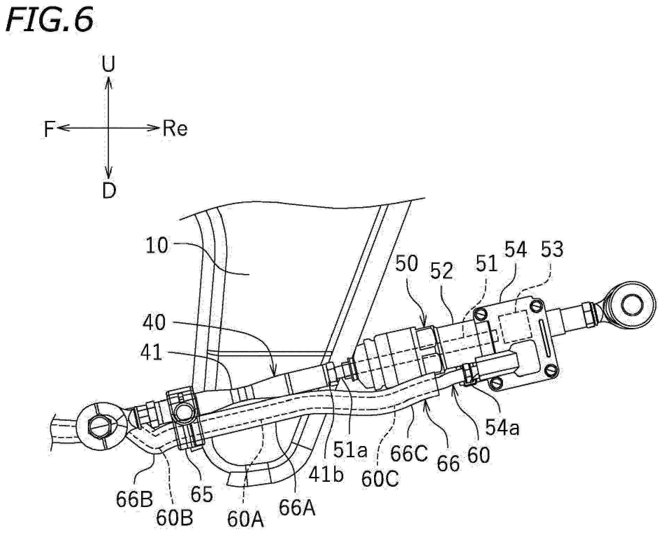

The waterproof sensor 50 is a waterproof sensor that detects contraction of the shift rod 40. As shown in FIG. 6, the waterproof sensor 50 includes a rod-shaped sensor rod 51, a casing 52 that axially slidably supports the sensor rod 51, a mechanical switch 53 that is turned ON/OFF by contact with the sensor rod 51, a switch case 54 that houses the switch 53 therein, and a spring (not shown) that urges the sensor rod 51 away from the switch 53. The casing 52 and the switch case 54 have a watertight structure (not shown) that prevents water from entering. A front end portion 51 a of the sensor rod 51 is connected to a rear end portion 41 b of the main rod 41.

As described above, in FIG. 3, the shift pedal 30 rotates clockwise when shifting up. A compressive force is applied to the shift rod 40 when shifting up. When a compressive force is applied to the shift rod 40, the sensor rod 51 moves toward the switch 53 and comes into contact with the switch 53. Thus, the switch 53 is turned ON. The waterproof sensor 50 is configured to detect a shift-up operation of the shift pedal 30. Upon completion of the shift-up operation by the rider P, the sensor rod 51 receives the force of the spring to return to the neutral position away from the switch 53.

Note that in the present embodiment, the waterproof sensor 50 is configured not to detect extension of the shift rod 40. The waterproof sensor 50 is configured not to detect a shift-down operation of the shift pedal 30.

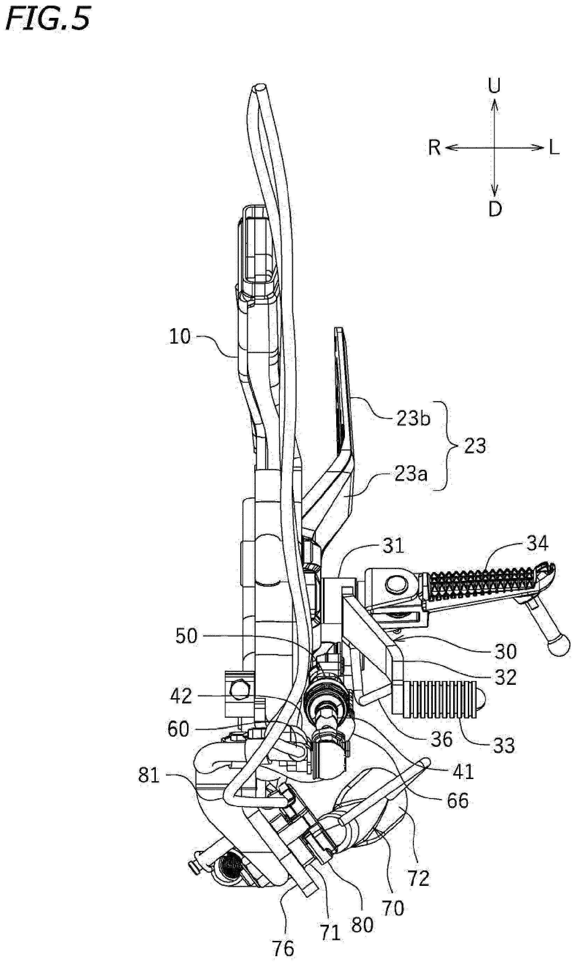

As shown in FIG. 3, at least a portion of the waterproof sensor 50 is arranged rearward relative to the side frame 10. Note that "arranged rearward relative to the side frame 10" means being arranged rearward relative to the rear edge of the side frame 10 as the vehicle is seen from the side. The waterproof sensor 50 is arranged rearward relative to the pedal operation shaft 33. The waterproof sensor 50 is arranged rearward relative to the pivot shaft 11. The switch case 54 is arranged rearward relative to the side frame 10. As shown in FIG. 4 and FIG. 5, the waterproof sensor 50 is arranged leftward relative to the side frame 10 and rightward relative to the shift pedal 30. The waterproof sensor 50 is arranged outward in the vehicle width direction relative to the side frame 10 and inward in the vehicle width direction relative to the shift pedal 30.

As shown in FIG. 3, the footrest bracket 20 is arranged upward of the waterproof sensor 50. As shown in FIG. 5, the side cover 23 of the footrest bracket 20 includes an inclined portion 23a that extends upward and outward in the vehicle width direction, and a vertical portion 23b that extends upward from the inclined portion 23a. As shown in FIG. 4, the footrest bracket 20 overlaps with at least a portion of the waterproof sensor 50 as the vehicle is seen from above.

The wire harness 60 is connected to the waterproof sensor 50. As shown in FIG. 6, the switch case 54 is formed with a connection port 54a that is open forward. The wire harness 60 is connected to the connection port 54a. Inside the switch case 54, a first end portion of the wire harness 60 is connected to the switch 53. The wire harness 60 extends forward from the switch case 54. The wire harness 60 does not protrude downward from the switch case 54. A second end portion of the wire harness 60 is connected to an ECU (Electronic Control Unit) 90 (see FIG. 3).

The ECU 90 is configured to receive a signal from the waterproof sensor 50 to perform a control of temporarily lowering the output power of the engine 7. When the waterproof sensor 50 detects a shift-up operation, the ECU 90 temporarily lowers the output power of the engine 7, thereby reducing the torque for driving the gear (not shown) of the transmission. Thus, it is possible to perform a shift change without releasing the accelerator, for example. It is also possible to perform a shift change without disconnecting the clutch. Therefore, it is possible to quickly perform a shift change. It is also possible to reduce the burden of the shift operation of the rider.

A portion of the wire harness 60 is covered by a harness cover 66. The harness cover 66 is formed in a hose shape. A portion of the wire harness 60 is inserted in the harness cover 66.

As shown in FIG. 6, the harness cover 66 includes an overlap portion 66A that overlaps with the side frame 10 as the vehicle is seen from the side, a front portion 66B that is located forward of the overlap portion 66A, and a rear portion 66C that is located rearward of the overlap portion 66A. Herein, the overlap portion 66A and the rear portion 66C are arranged directly under the shift rod 40. As shown in FIG. 4, the overlap portion 66A and the rear portion 66C of the harness cover 66 overlap with the shift rod 40 as the vehicle is seen from above.

As described above, the wire harness 60 is inserted in the harness cover 66. As shown in FIG. 6, the wire harness 60 includes an overlap portion 60A that overlaps with the side frame 10 as the vehicle is seen from the side, a front portion 60B that is located forward of the overlap portion 60A, and a rear portion 60C that is located rearward of the overlap portion 60A. The overlap portion 60A and the rear portion 60C of the wire harness 60 are arranged downward of the shift rod 40. Herein, the overlap portion 60A and the rear portion 60C are arranged directly under the shift rod 40. As the vehicle is seen from above, the overlap portion 60A and the rear portion 60C of the wire harness 60 overlap with the shift rod 40 (see FIG. 4).

As shown in FIG. 6, the wire harness 60, together with the harness cover 66, is tied to the shift rod 40 by a cable tie 65. The overlap portion 60A and the rear portion 60C of the wire harness 60 are arranged along the shift rod 40, together with the overlap portion 66A and the rear portion 66C of the harness cover 66. Herein, the wire harness 60 and the harness cover 66 are tied to the main rod 41 by the cable tie 65. Note however that the wire harness 60 and the harness cover 66 may be tied to the waterproof sensor 50 by the cable tie 65. There is no limitation on the number of cable ties 65. The wire harness 60 and the harness cover 66 may be tied only to one of the main rod 41 and the waterproof sensor 50 or may be tied to both of them. While the cable tie 65 is an example of a fastening member for fastening the wire harness 60 to the shift rod 40, there is no particular limitation on the fastening member. The fastening member is not limited to a band-shaped member, but it may be a chord-shaped member or may be any other member.

As shown in FIG. 3, the waterproof sensor 50 is arranged in the vicinity of the shift pedal 30. The motorcycle 1 includes a guard member 36 that prevents the foot of the rider who operates the shift pedal 30 from hitting the waterproof sensor 50. The guard member 36 overlaps with the waterproof sensor 50 as the vehicle is seen from the side. As the vehicle is seen from the side, at least a portion of the guard member 36 overlaps with the switch case 54. Herein, the guard member 36 is secured to the shift pedal 30. The guard member 36 is a rod-shaped member. Note however that there is no particular limitation on the shape of the guard member 36. The guard member 36 may be a plate-shaped member, for example.

As described above, the overlap portion 66A and the rear portion 66C of the harness cover 66 are arranged downward of the shift rod 40, together with the overlap portion 60A and the rear portion 60C of the wire harness 60. The guard member 36 prevents the foot of the rider from hitting the harness cover 66 and the wire harness 60.

A bracket 76 is secured to a lower portion of the side frame 10. The side stand 70 is rotatably supported on the bracket 76. The side stand 70 includes a proximal portion 71 that is supported on the bracket 76 so as to be rotatable up and down, and a distal portion 72. The side stand 70 is configured to be rotatable between the standing position in which the distal portion 72 is located downward of the proximal portion 71 and the retracted position in which the distal portion 72 is located rearward of the proximal portion 71. Note that FIG. 3 shows a state where the side stand 70 is in the retracted position. When the motorcycle 1 is parked, the side stand 70 is positioned in the standing position. When the side stand 70 is in the standing position, the distal portion 72 is in contact with the ground. When the rider rides on the motorcycle 1, the side stand 70 is positioned in the retracted position. When the side stand 70 is in the retracted position, the distal portion 72 is located upward relative to the ground, and spaced apart from the ground. As shown in FIG. 3, when the motorcycle 1 is standing upright on a horizontal surface and the side stand 70 is in the retracted position, the waterproof sensor 50 is arranged upward relative to the side stand 70, rearward relative to the proximal portion 71 of the side stand 70 and forward relative to the distal portion 72 of the side stand 70.

The side stand switch 80 is attached to the proximal portion 71 of the side stand 70. The side stand switch 80 is configured to detect the position of the side stand 70. The side stand switch 80 is turned ON or OFF when the position of the side stand 70 is switched from the standing position to the retracted position or switched from the retracted position to the standing position. A wire harness 81 is connected to the side stand switch 80. The wire harness 81 extends forward. A front end portion of the wire harness 81 is connected to the ECU 90. The waterproof sensor 50 is arranged rearward and upward of the side stand switch 80.

The motorcycle 1 of the present embodiment is configured as described above. Next, various advantageous effects of the motorcycle 1 will be described.

The motorcycle 1 of the present embodiment includes the waterproof sensor 50 as a sensor for detecting the operation of the shift pedal 30. Therefore, it is possible to run with no problems on bad terrains with many puddles, etc. However, the waterproof sensor 50 is larger in size as compared with a sensor that is not waterproof.

According to the present embodiment, the waterproof sensor 50 is arranged relatively rearward. At least a portion of the waterproof sensor 50 is arranged rearward relative to the side frame 10. The space rearward of the side frame 10 is used as a space for installment for at least a portion of the waterproof sensor 50. The waterproof sensor 50 and the side frame 10 are unlikely to interfere with each other. Therefore, despite the provision of the waterproof sensor 50, it is possible to suppress an increase in size around the waterproof sensor 50 in the vehicle width direction.

When the waterproof sensor 50 is arranged relatively rearward, there may occur interference between the overlap portion 60A and the rear portion 60C of the wire harness 60 and the side frame 10 and interference between the overlap portion 60A and the rear portion 60C of the wire harness 60 and the shift rod 40. However, according to the present embodiment, the overlap portion 60A and the rear portion 60C of the wire harness 60 is arranged downward of the shift rod 40. Thus, it is possible to avoid such interference while suppressing an increase in size in the vehicle width direction.

Therefore, according to the present embodiment, the waterproof sensor 50 can be used as a sensor provided on the shift rod 40 while suppressing an increase in size in the vehicle width direction.

According to the present embodiment, the waterproof sensor 50 is arranged rearward relative to the pedal operation shaft 33. The space rearward relative to the pedal operation shaft 33 is used as a space for installment of the waterproof sensor 50. Since the waterproof sensor 50 is arranged more rearward, it is possible to further suppress an increase in size in the vehicle width direction.

According to the present embodiment, as shown in FIG. 6, the waterproof sensor 50 includes the sensor rod 51 and the mechanical switch 53 that is turned ON/OFF through contact with the sensor rod 51. The waterproof sensor 50 is a mechanical sensor. The waterproof sensor 50 can be made inexpensive as compared with an optical sensor.

The waterproof sensor 50 includes the switch case 54 housing the switch 53. The switch case 54 has a watertight structure. The vertical size of the switch case 54 is greater than the vertical size of the other portion of the waterproof sensor 50. The switch case 54 is larger than the other portion of the waterproof sensor 50. According to the present embodiment, the switch case 54 is arranged rearward relative to the side frame 10. Therefore, the switch case 54 and the side frame 10 do not interfere with each other, and it is possible to suppress an increase in size in the vehicle width direction.

The switch case 54 includes the connection port 54a that is open forward, and the wire harness 60 is connected to the connection port 54a. The wire harness 60 extends forward from the switch case 54. A situation where the wire harness 60 protrudes downward from the switch case 54 is avoided. Therefore, it is possible to arrange the wire harness 60 in a compact arrangement.

According to the present embodiment, as shown in FIG. 4, the overlap portion 60A and the rear portion 60C of the wire harness 60 overlap with the shift rod 40 as the vehicle is seen from above. The overlap portion 60A and the rear portion 60C of the wire harness 60 do not protrude outward in the vehicle width direction. Therefore, it is possible to suppress an increase in size in the vehicle width direction.

According to the present embodiment, as shown in FIG. 6, the wire harness 60, together with the harness cover 66, is secured to the shift rod 40 by the cable tie 65. The wire harness 60, together with the harness cover 66, can be made to conform to the shift rod 40. Therefore, the wire harness 60 and the harness cover 66 can be arranged in a compact arrangement.

According to the present embodiment, the wire harness 60 is covered by the harness cover 66. It is possible to protect the wire harness 60 from gravel, mud, etc., kicked up from the road surface. When the rider operates the shift pedal 30 or the side stand 70, it is possible to protect the wire harness 60 from the foot of the rider. Although the harness cover 66 has a larger diameter than the wire harness 60, the overlap portion 66A and the rear portion 66C of the harness cover 66 are arranged downward of the shift rod 40 and overlap with the shift rod 40 as the vehicle is seen from above (see FIG. 4). The overlap portion 66A and the rear portion 66C of the harness cover 66 do not protrude outward in the vehicle width direction relative to the shift rod 40. Therefore, it is possible to suppress an increase in size in the vehicle width direction.

According to the present embodiment, as shown in FIG. 5, the waterproof sensor 50 is arranged outward in the vehicle width direction relative to the side frame 10 and inward in the vehicle width direction relative to the shift pedal 30. The waterproof sensor 50 is arranged in a compact arrangement between the side frame 10 and the shift pedal 30.

According to the present embodiment, as shown in FIG. 3, the waterproof sensor 50 is arranged relatively rearward, and the foot of the rider may possibly hit the waterproof sensor 50 when operating the shift pedal 30. However, the shift pedal 30 is provided with the guard member 36. The guard member 36 prevents the foot of the rider from hitting the waterproof sensor 50.

According to the present embodiment, when the motorcycle 1 is standing upright on a horizontal surface and the side stand 70 is in the retracted position, the waterproof sensor 50 is arranged upward relative to the side stand 70, rearward relative to the proximal portion 71 of the side stand 70 and forward relative to the distal portion 72 of the side stand 70. The waterproof sensor 50 and the side stand 70 can be arranged in a compact arrangement while avoiding interference therebetween.

The waterproof sensor 50 is arranged rearward and upward of the side stand switch 80. The waterproof sensor 50 and the side stand switch 80 can be arranged in a compact arrangement while avoiding interference therebetween.

According to the present embodiment, the footrest bracket 20 is arranged upward relative to the waterproof sensor 50 as shown in FIG. 3, and overlaps with at least a portion of the waterproof sensor 50 as the vehicle is seen from above as shown in FIG. 4. The waterproof sensor 50 is arranged directly under at least a portion of the footrest bracket 20 (see FIG. 5). Therefore, it is possible to suppress an increase in size in the vehicle width direction.

Although the waterproof sensor 50 may be configured to detect both contraction and extension of the shift rod 40, it is configured to detect only contraction of the shift rod 40 in the present embodiment. Therefore, the waterproof sensor 50 can be made smaller as compared with a case where the waterproof sensor 50 is configured to detect both contraction and extension of the shift rod 40.

One embodiment has been described above. However, the embodiment described above is merely an example, and various other embodiments are possible without departing from the scope of the present invention disclosed by the appended claims. Next, examples of other embodiments will be described briefly.

The position in the front-rear direction of the waterproof sensor 50 may be changed as needed. While only a portion of the waterproof sensor 50 may be arranged rearward relative to the side frame 10, the entirety of the waterproof sensor 50 may be arranged rearward relative to the side frame 10.

The shift rod 40 may be configured to extend when shifting up. For example, the connecting portion between the shift rod 40 and the shift pedal 30 may be located upward of the pedal support shaft 31. In such a case, the waterproof sensor 50 may be configured to detect only extension of the shift rod 40.

A portion of the waterproof sensor 50 may be arranged forward relative to the pedal operation shaft 33. The pedal operation shaft 33 may be arranged forward relative to the side frame 10.

The waterproof sensor 50 may be an optical sensor. At least a portion of the switch case 54 of the waterproof sensor 50 may overlap with the side frame 10 as the vehicle is seen from the side.

The connection port 54a of the switch case 54 may be open downward. The wire harness 60 may extend downward from the switch case 54 and then extend forward.

The overlap portion 60A and/or the rear portion 60C of the wire harness 60 do not need to be arranged directly under the shift rod 40. The overlap portion 60A and/or the rear portion 60C of the wire harness 60 do not need to overlap with the shift rod 40 as the vehicle is seen from above.

The wire harness 60 does not need to be secured on the shift rod 40. For example, the wire harness 60 may be secured to another vehicle part.

The harness cover 66 may be absent. The overlap portion 66A and/or the rear portion 66C of the harness cover 66 do not need to be arranged directly under the shift rod 40. The overlap portion 66A and/or the rear portion 66C of the harness cover 66 do not need to overlap with the shift rod 40 as the vehicle is seen from above.

The guard member 36 may be provided on a vehicle part other than the shift pedal 30. The guard member 36 may be absent.

The side stand switch 80 may be absent.

The footrest bracket 20 does not need to overlap with the waterproof sensor 50 as the vehicle is seen from above. The shift pedal 30 does not need to be supported on the footrest bracket 20. The shift pedal 30 may be supported on a vehicle part other than the footrest bracket 20. The footrest bracket 20 may be absent.

A straddled vehicle refers to a vehicle that is straddled by a rider. The straddled vehicle is not limited to the motorcycle 1. The straddled vehicle may be an auto tricycle, an ATV (All Terrain Vehicle), or a snowmobile, for example.

### Reference Signs List

1: Motorcycle (straddled vehicle), 7: Internal combustion engine, 8: Rear arm, 10: Side frame, 11: Pivot shaft, 16: Shift shaft, 20: Footrest bracket, 30: Shift pedal, 31: Pedal support shaft, 32: Pedal arm, 33: Pedal operation shaft, 36: Guard member, 40: Shift rod, 50: Waterproof sensor, 51: Sensor rod, 53: Mechanical switch, 54: Switch case, 54a: Connection port, 60: Wire harness, 60A: Overlap portion, 60C: Rear portion, 65: Cable tie (fastening member), 66: Harness cover, 66A: Overlap portion, 66C: Rear portion, 70: Side stand, 71: Proximal portion, 72: Distal portion, 80: Side stand switch, 90: ECU (controller)

## Claims

1. A straddled vehicle (1) comprising:
an internal combustion engine (7);
a side frame (10) that is arranged sideward of the internal combustion engine (7) with regard to a vehicle left and right direction and extending downward with regard to a vehicle up and down direction;
a shift shaft (16) provided on the internal combustion engine (7);
a shift pedal (30);
a shift rod (40) that links together the shift shaft (16) and the shift pedal (30), wherein a portion of the shift rod (40) overlaps with the side frame (10) as the vehicle is seen from the side;
a sensor (50) that is provided on the shift rod (40) and is configured to detect contraction or extension of the shift rod (40), at least a portion of the sensor (50) is arranged rearward relative to the side frame (10) with regard to a vehicle front and rear direction; and
a wire harness (60) connected to the sensor (50), the wire harness (60) includes an overlap portion (60A) that overlaps with the side frame (10) as the vehicle is seen from the side and is arranged downward of the shift rod (40) with regard to the vehicle up and down direction, **characterized in that**
the sensor is a waterproof sensor (50), and
the wire harness (60) includes a rear portion (60C) that is located rearward of the overlap portion (60A) with regard to the vehicle front and rear direction;
the rear portion (60C) of the wire harness (60) is arranged downward of the shift rod (40) with regard to the vehicle up and down direction.

2. The straddled vehicle (1) according to claim 1, **characterized in that** the shift pedal (30) includes a pedal support shaft (31) that is rotatable up and down with regard to the vehicle up and down direction, a pedal arm (32) that extends forward from the pedal support shaft (31) with regard to the vehicle front and rear direction, and a pedal operation shaft (33) that extends outward in a vehicle width direction and the vehicle left and right direction from the pedal arm (32); and
the waterproof sensor (50) is arranged rearward relative to the pedal operation shaft (33) with regard to the vehicle front and rear direction.

3. The straddled vehicle (1) according to claim 2, **characterized in that** the pedal operation shaft (33) overlaps with the side frame (10) as the vehicle is seen from the side.

4. The straddled vehicle according to any one of claims 1 to 3, **characterized in that** the waterproof sensor (50) includes a sensor rod (51), and a mechanical switch (53) that is configured to be turned ON/OFF through contact with the sensor rod (51).

5. The straddled vehicle (1) according to claim 4, **characterized in that** the waterproof sensor (50) includes a switch case (54) housing the mechanical switch (53); and wherein
the switch case (54) is arranged rearward relative to the side frame (10) with regard to the vehicle front and rear direction, and/or
the switch case (54) includes a connection port (54a) that is open forward with regard to the vehicle front and rear direction and the wire harness (60) is connected to the connection port (54a).

6. The straddled vehicle according to any one of claims 1 to 5, **characterized in that** the overlap portion (60A) and the rear portion (60C) of the wire harness (60) overlap with the shift rod (40) as the vehicle is seen from above.

7. The straddled vehicle according to any one of claims 1 to 6, comprising a fastening member (65) that fastens the wire harness (60) to the shift rod (40).

8. The straddled vehicle according to any one of claims 1 to 7, **characterized by** a hose-shaped harness cover (66) in which the wire harness (60) is inserted,
wherein the harness cover (66) includes a portion (66A, 66C) that is arranged downward of the shift rod (40) with regard to the vehicle up and down direction and overlaps with the shift rod (40) as the vehicle is seen from above.

9. The straddled vehicle according to any one of claims 1 to 8, **characterized in that** the waterproof sensor (50) is arranged outward in a vehicle width direction and the vehicle left and right direction relative to the side frame (10) and inward in the vehicle width direction and the vehicle left and right direction relative to the shift pedal (30), and/or
the straddled vehicle comprises a guard member (36) that is arranged outward of the waterproof sensor (50) in a vehicle width direction and the vehicle left and right direction, overlaps with the waterproof sensor (50) as the vehicle is seen from the side, and prevents a foot of a rider operating the shift pedal (30) from hitting the waterproof sensor (50).

10. The straddled vehicle according to any one of claims 1 to 9, **characterized by** a side stand (70) including a proximal portion (71) that is supported so as to be rotatable up and down with regard to the vehicle up and down direction, and a distal portion (72), wherein:
the side stand (70) is configured to be rotatable between a standing position in which the distal portion (72) is located downward of the proximal portion (71) with regard to the vehicle up and down direction and a retracted position in which the distal portion (72) is located rearward of the proximal portion (71) with regard to the vehicle front and rear direction; and
when the straddled vehicle (1) is standing upright on a horizontal surface and the side stand (70) is in the retracted position, the waterproof sensor (50) is arranged upward relative to the side stand (70) with regard to the vehicle up and down direction, rearward relative to the proximal portion (71) of the side stand (70) and forward relative to the distal portion (72) of the side stand (70) with regard to the vehicle front and rear direction.

11. The straddled vehicle (1) according to claim 10, **characterized by** a side stand switch (80) that is attached to the proximal portion (71) of the side stand (70) and is configured to detect a position of the side stand (70),
wherein the waterproof sensor (50) is arranged rearward with regard to the vehicle front and rear direction and upward with regard to the vehicle up and down direction of the side stand switch (80).

12. The straddled vehicle according to any one of claims 1 to 11, **characterized by** a footrest bracket (20) that is secured on the side frame (10) and arranged rearward of the side frame (10) with regard to the vehicle front and rear direction, wherein:
the shift pedal (30) is attached to the footrest bracket (20); and
the footrest bracket (20) is arranged upward relative to the waterproof sensor (50) with regard to the vehicle up and down direction and overlaps with at least a portion of the waterproof sensor (50) as the vehicle is seen from above.

13. The straddled vehicle according to any one of claims 1 to 12, **characterized by** a controller (90) connected to the wire harness (60),
wherein the controller (90) is configured to receive a signal from the waterproof sensor (50) to perform a control of temporarily lowering an output power of the internal combustion engine (7).

14. The straddled vehicle according to any one of claims 1 to 13, **characterized by**:
a pivot shaft (11) supported on the side frame (10); and
a rear arm (8) pivotally linked to the side frame (10) with the pivot shaft (11) therebetween,
wherein the waterproof sensor (50) is arranged rearward relative to the pivot shaft (11).

15. The straddled vehicle (1) according to any one of claims 1 to 14, **characterized in that** the waterproof sensor (50) is configured to detect only one of contraction and extension of the shift rod (40).

## Patentansprüche

1. Ein Spreiz-Sitz-Fahrzeug (1), das umfasst:
einen Verbrennungsmotor (7);
einen Seitenrahmen (10), der seitlich von dem Verbrennungsmotor (7) angeordnet ist, in Bezug auf eine Fahrzeug-Links-und-Rechts-Richtung und sich nach unten erstreckt, in Bezug auf eine Fahrzeug-Oben-und-Unten-Richtung;
eine Schaltwelle (16), die an dem Verbrennungsmotor (7) vorgesehen ist;
ein Schaltpedal (30);
eine Schaltstange (40), welche die Schaltwelle (16) und das Schaltpedal (30) miteinander verbindet, wobei ein Abschnitt der Schaltstange (40) den Seitenrahmen (10) überlappt, wenn das Fahrzeug von der Seite betrachtet ist;
einen Sensor (50), der an der Schaltstange (40) vorgesehen und konfiguriert ist, um ein Zusammenziehen oder Ausfahren der Schaltstange (40) zu erfassen, zumindest ein Abschnitt des Sensors (50) ist relativ zum Seitenrahmen (10) nach hinten angeordnet, in Bezug auf eine Fahrzeug-Vorder-und-Rück-Richtung; und
einen Kabelbaum (60), der mit dem Sensor (50) verbunden ist, der Kabelbaum (60) weist einen Überlappungsabschnitt (60A) auf, der den Seitenrahmen (10) überlappt wenn das Fahrzeug von der Seite betrachtet ist, und ist unterhalb der Schaltstange (40) angeordnet, in Bezug auf die Fahrzeug-Oben-und-Unten-Richtung, **dadurch gekennzeichnet, dass**
der Sensor ein wasserdichter Sensor (50) ist, und
der Kabelbaum (60) einen hinteren Abschnitt (60C) enthält, der hinter dem Überlappungsabschnitt (60A) angeordnet ist, in Bezug auf die Fahrzeug-Vorder-und-Rück-Richtung;
der hintere Abschnitt (60C) des Kabelbaums (60) ist unterhalb der Schaltstange (40) angeordnet, in Bezug auf die Fahrzeug-Oben-und-Unten-Richtung.

2. Das Spreiz-Sitz-Fahrzeug (1) gemäß Anspruch 1, **dadurch gekennzeichnet, dass** das Schaltpedal (30) eine Pedalstützwelle (31), die auf- und abwärts drehbar ist, in Bezug auf die Fahrzeug-Oben-und-Unten-Richtung, einen Pedalarm (32), der sich von der Pedalstützwelle (31) nach vorne erstreckt, in Bezug auf die Fahrzeug-Vorder-und-Rück-Richtung, und eine Pedalbetätigungswelle (33) enthält, die sich von dem Pedalarm (32) in Fahrzeugbreitenrichtung und der Fahrzeug-Links-und-Rechts-Richtung nach außen erstreckt; und
der wasserdichte Sensor (50) relativ zur Pedalbetätigungswelle (33) nach hinten angeordnet ist, in Bezug auf die Fahrzeug-Vorder-und-Rück-Richtung.

3. Das Spreiz-Sitz-Fahrzeug (1) gemäß Anspruch 2, **dadurch gekennzeichnet, dass** sich die Pedalbetätigungswelle (33) mit dem Seitenrahmen (10) überlappt, wenn das Fahrzeug von der Seite betrachtet ist.

4. Das Spreiz-Sitz-Fahrzeug gemäß einem der Ansprüche 1 bis 3, **dadurch gekennzeichnet, dass** der wasserdichte Sensor (50) einen Sensorstab (51) und einen mechanischen Schalter (53) enthält, der konfiguriert ist, um durch Kontakt mit dem Sensorstab (51) EIN/AUS geschaltet zu werden.

5. Das Spreiz-Sitz-Fahrzeug (1) gemäß Anspruch 4, **dadurch gekennzeichnet, dass** der wasserdichte Sensor (50) ein Schaltergehäuse (54) enthält, das den mechanischen Schalter (53) aufnimmt; und wobei
das Schaltergehäuse (54) relativ zum Seitenrahmen (10) nach hinten angeordnet ist, in Bezug auf die Fahrzeug-Vorder-und-Rück-Richtung, und/oder das Schaltergehäuse (54) eine Anschlussöffnung (54a) enthält, die nach vorne offen ist, in Bezug auf die Fahrzeug-Vorder-und-Rück-Richtung, und der Kabelbaum (60) mit der Anschlussöffnung (54a) verbunden ist.

6. Das Spreiz-Sitz-Fahrzeug gemäß einem der Ansprüche 1 bis 5, **dadurch gekennzeichnet, dass** der Überlappungsbereich (60A) und der hintere Abschnitt (60C) des Kabelbaums (60) sich mit der Schaltstange (40) überlappen, wenn das Fahrzeug von oben betrachtet ist.

7. Das Spreiz-Sitz-Fahrzeug gemäß einem der Ansprüche 1 bis 6, das ein Befestigungselement (65), das den Kabelbaum (60) an der Schaltstange (40) befestigt, umfasst.

8. Das Spreiz-Sitz-Fahrzeug gemäß einem der Ansprüche 1 bis 7, **gekennzeichnet durch** eine schlauchförmige Kabelbaumabdeckung (66), in die der Kabelbaum (60) eingelegt ist,
wobei die Kabelbaumabdeckung (66) einen Abschnitt (66A, 66C) enthält, der unterhalb der Schaltstange (40) angeordnet ist, in Bezug auf die Fahrzeug-Oben-und-Unten-Richtung, und sich mit der Schaltstange (40) überlappt, wenn das Fahrzeug von oben betrachtet ist.

9. Das Spreiz-Sitz-Fahrzeug gemäß einem der Ansprüche 1 bis 8, **dadurch gekennzeichnet, dass** der wasserdichte Sensor (50) nach außen in Fahrzeugbreitenrichtung und in Fahrzeug-Links-und-Rechts-Richtung relativ zum Seitenrahmen (10) und nach innen in Fahrzeugbreitenrichtung und in Fahrzeug-Links-und-Rechts-Richtung relativ zum Schaltpedal (30) angeordnet ist, und/oder
das Spreiz-Sitz-Fahrzeug ein Schutzelement (36) umfasst, das außerhalb des wasserdichten Sensors (50) in einer Fahrzeugbreitenrichtung und der Fahrzeug-Links-und-Rechts-Richtung angeordnet ist, den wasserdichten Sensor (50) überlappt, wenn das Fahrzeug von der Seite gesehen wird, und verhindert, dass ein Fuß eines Fahrers, der das Schaltpedal (30) betätigt, den wasserdichten Sensor (50) trifft.

10. Das Spreiz-Sitz-Fahrzeug gemäß einem der Ansprüche 1 bis 9, **gekennzeichnet durch** einen Seitenständer (70), der einen proximalen Abschnitt (71), der so gelagert ist, dass er in Bezug auf die Fahrzeug-Oben-und-Unten-Richtung auf und ab drehbar ist, und einem distalen Abschnitt (72) enthält, wobei:
der Seitenständer (70) konfiguriert ist, um zwischen einer stehenden Position, in der sich der distale Abschnitt (72) in Bezug auf die Fahrzeug-Oben-und-Unten-Richtung unterhalb des proximalen Abschnitts (71) befindet, und einer zurückgezogenen Position, in der sich der distale Abschnitt (72) in Bezug auf die Vorder- und Rückwärtsrichtung des Fahrzeugs hinter dem proximalen Abschnitt (71) befindet, drehbar zu sein; und
wenn das Spreiz-Sitz-Fahrzeug (1) aufrecht auf einer horizontalen Fläche steht und der Seitenständer (70) sich in der eingefahrenen Position befindet, der wasserdichte Sensor (50) relativ zum Seitenständer (70) in Bezug auf die Fahrzeug-Oben-und-Unten-Richtung nach oben, relativ zum proximalen Abschnitt (71) des Seitenständers (70) nach hinten und relativ zum distalen Abschnitt (72) des Seitenständers (70) in Bezug auf die Fahrzeug-Vorder-und-Rück-Richtung nach vorne angeordnet ist.

11. Das Spreiz-Sitz-Fahrzeug (1) gemäß Anspruch 10, **gekennzeichnet durch** einen Seitenständerschalter (80), der an dem proximalen Abschnitt (71) des Seitenständers (70) angebracht und konfiguriert ist, um eine Position des Seitenständers (70) zu erfassen,
wobei der wasserdichte Sensor (50) in Bezug auf die Fahrzeug-Vorder-und-Rück-Richtung nach hinten und in Bezug auf die Fahrzeug-Oben-und-Unten-Richtung des Seitenständerschalters (80) nach oben angeordnet ist.

12. Das Spreiz-Sitz-Fahrzeug gemäß einem der Ansprüche 1 bis 11, **gekennzeichnet durch** eine Fußrastenhalterung (20), die an dem Seitenrahmen (10) befestigt und in Bezug auf die Fahrzeug-Vorder-und-Rück-Richtung hinter dem Seitenrahmen (10) angeordnet ist, wobei:
das Schaltpedal (30) an der Fußrastenhalterung (20) befestigt ist; und
die Fußrastenhalterung (20) relativ zum wasserdichten Sensor (50) in Bezug auf die Fahrzeug-Oben-und-Unten-Richtung nach oben angeordnet ist und sich mit zumindest einem Abschnitt des wasserdichten Sensors (50) überlappt, wenn das Fahrzeug von oben betrachtet wird.

13. Das Spreiz-Sitz-Fahrzeug gemäß einem der Ansprüche 1 bis 12, **gekennzeichnet durch** ein Steuergerät (90), das mit dem Kabelbaum (60) verbunden ist,
wobei das Steuergerät (90) konfiguriert ist, um ein Signal von dem wasserdichten Sensor (50) zu empfangen, um eine Steuerung zum vorübergehenden Absenken einer Ausgangsleistung des Verbrennungsmotors (7) durchzuführen.

14. Das Spreiz-Sitz-Fahrzeug gemäß einem der Ansprüche 1 bis 13, **gekennzeichnet durch:**
eine Schwenkwelle (11), die an dem Seitenrahmen (10) gelagert ist; und
einen hinteren Arm (8), der schwenkbar mit dem Seitenrahmen (10) verbunden ist, wobei die Schwenkwelle (11) dazwischen liegt,
wobei der wasserdichte Sensor (50) relativ zur Schwenkwelle (11) nach hinten angeordnet ist.

15. Das Spreiz-Sitz-Fahrzeug (1) gemäß einem der Ansprüche 1 bis 14, **dadurch gekennzeichnet, dass** der wasserdichte Sensor (50) konfiguriert ist, um nur ein Zusammenziehen oder ein Ausfahren der Schaltstange (40) zu erfassen.

## Revendications

1. Véhicule à enfourcher (1) comprenant :
un moteur à combustion interne (7) ;
un cadre latéral (10) qui est disposé sur un côté du moteur à combustion interne (7) selon une direction gauche et droite de véhicule et s'étendant vers le bas selon une direction haut et bas de véhicule ;
un arbre de changement de vitesse (16) disposé sur le moteur à combustion interne (7) ;
une pédale de changement de vitesse (30) ;
une tige de changement de vitesse (40) qui relie ensemble l'arbre de changement de vitesse (16) et la pédale de changement de vitesse (30), dans lequel une partie de la tige de changement de vitesse (40) chevauche le cadre latéral (10) tandis que le véhicule est vu depuis le côté ;
un capteur (50) qui est disposé sur la tige de changement de vitesse (40) et est configuré pour détecter une contraction ou une extension de la tige de changement de vitesse (40), au moins une partie du capteur (50) est disposée vers l'arrière par rapport au cadre latéral (10) selon une direction avant et arrière de véhicule ; et
un faisceau de câbles (60) connecté au capteur (50), le faisceau de câbles (60) inclut une partie de chevauchement (60A) qui chevauche le cadre latéral (10) tandis que le véhicule est vu depuis le côté et est disposé vers le bas de la tige de changement de vitesse (40) selon la direction haut et bas de véhicule, **caractérisé en ce que**
le capteur est un capteur étanche (50), et
le faisceau de câbles (60) inclut une partie arrière (60C) qui se trouve en arrière de la partie de chevauchement (60A) selon la direction avant et arrière de véhicule ;
la partie arrière (60C) du faisceau de câbles (60) est disposée vers le bas de la tige de changement de vitesse (40) selon la direction haut et bas de véhicule.

2. Le véhicule à enfourcher (1) selon la revendication 1, **caractérisé en ce que** la pédale de changement de vitesse (30) inclut un arbre de support de pédale (31) qui est mobile en rotation vers le haut et le bas selon la direction haut et bas de véhicule, un bras de pédale (32) qui s'étend vers l'avant depuis l'arbre de support de pédale (31) selon la direction avant et arrière de véhicule, et un arbre de fonctionnement de pédale (33) qui s'étend vers l'extérieur dans une direction de largeur de véhicule et la direction gauche et droite de véhicule depuis le bras de pédale (32) ; et
le capteur étanche (50) est disposé en arrière par rapport à l'arbre de fonctionnement de pédale (33) selon la direction avant et arrière de véhicule.

3. Le véhicule à enfourcher (1) selon la revendication 2, **caractérisé en ce que** l'arbre de fonctionnement de pédale (33) chevauche le cadre latéral (10) tandis que le véhicule est vu depuis le côté.

4. Le véhicule à enfourcher selon l'une quelconque des revendications 1 à 3, **caractérisé en ce que** le capteur étanche (50) inclut une tige de capteur (51) et un commutateur mécanique (53) qui est configuré pour être mis sous tension/hors tension (ON/OFF) via un contact avec la tige de capteur (51).

5. Le véhicule à enfourcher (1) selon la revendication 4, **caractérisé en ce que** le capteur étanche (50) inclut un boîtier de commutateur (54) abritant le commutateur mécanique (53) ; et
dans lequel
le boîtier de capteur (54) est disposé en arrière par rapport au cadre latéral (10) selon la direction avant et arrière de véhicule, et/ou
le boîtier de commutateur (54) inclut un port de connexion (54a) qui est ouvert vers l'avant selon la direction avant et arrière de véhicule et le faisceau de câbles (60) est connecté au port de connexion (54a).

6. Le véhicule à enfourcher selon l'une quelconque des revendications 1 à 5, **caractérisé en ce que** la partie de chevauchement (60A) et la partie arrière (60C) du faisceau de câbles (60) chevauchent la tige de changement de vitesse (40) tandis que le véhicule est vu depuis le dessus.

7. Le véhicule à enfourcher selon l'une quelconque des revendications 1 à 6, comprenant un élément de fixation (65) qui fixe le faisceau de câbles (60) à la tige de changement de vitesse (40).

8. Le véhicule à enfourcher selon l'une quelconque des revendications 1 à 7, **caractérisé par** un capot de faisceau de forme de tuyau (66) dans lequel le faisceau de câbles (60) est inséré,
dans lequel le capot de faisceau (66) inclut une partie (66A, 66C) qui est disposée vers le bas de la tige de changement de vitesse (40) selon la direction haut et bas de véhicule et chevauche la tige de changement de vitesse (40) tandis que le véhicule est vu depuis le dessus.

9. Le véhicule à enfourcher selon l'une quelconque des revendications 1 à 8, **caractérisé en ce que** le capteur étanche (50) est disposé vers l'extérieur dans une direction de largeur de véhicule et la direction gauche et droite de véhicule par rapport au cadre latéral (10) et vers l'intérieur dans la direction de largeur de véhicule et la direction gauche et droite de véhicule par rapport à la pédale de changement de vitesse (30), et/ou
le véhicule à enfourcher comprend un élément de protection (36) qui est disposé vers l'extérieur du capteur étanche (50) dans une direction de largeur de véhicule et la direction gauche et droite de véhicule, chevauche le capteur étanche (50) tandis que le véhicule est vu depuis le côté, et empêche un pied du motocycliste faisant fonctionner la pédale de changement de vitesse (30) de heurter le capteur étanche (50).

10. Le véhicule à enfourcher selon l'une quelconque des revendications 1 à 9, **caractérisé par** une béquille latérale (70) incluant une partie proximale (71) qui est soutenue de sorte à être mobile en rotation vers le haut et le bas selon la direction haut et bas de véhicule, et une partie distale (72), dans lequel :
la béquille latérale (70) est configurée pour être mobile en rotation entre une position dressée dans laquelle la partie distale (72) est située au-dessous de la partie proximale (71) selon la direction haut et bas de véhicule et une position rétractée dans laquelle la partie distale (72) est située en arrière de la partie proximale (71) selon la direction avant et arrière de véhicule ; et
lorsque le véhicule à enfourcher (1) est dressé sur une surface horizontale et la béquille latérale (70) est dans la position rétractée, le capteur étanche (50) est disposé vers le haut par rapport à la béquille latérale (70) selon la direction haut et bas de véhicule, en arrière par rapport à la partie proximale (71) de la béquille latérale (70) et en avant par rapport à la partie distale (72) de la béquille latérale (70) selon la direction avant et arrière de véhicule.

11. Le véhicule à enfourcher (1) selon la revendication 10, **caractérisé par** un commutateur de béquille latérale (80) qui est rattaché à la partie proximale (71) de la béquille latérale (70) et est configuré pour détecter une position de la béquille latérale (70),
dans lequel le capteur étanche (50) est disposé en arrière selon la direction avant et arrière de véhicule et au-dessus selon la direction haut et bas de véhicule du commutateur de béquille latérale (80).

12. Le véhicule à enfourcher selon l'une quelconque des revendications 1 à 11, **caractérisé par** une fixation de repose-pied (20) qui est fixée au cadre latéral (10) et disposée en arrière du cadre latéral (10) selon la direction avant et arrière du véhicule, dans lequel :
la pédale de changement de vitesse (30) est rattachée à la fixation de repose-pied (20) ; et
la fixation de repose-pied (20) est disposée au-dessus par rapport au capteur étanche (50) selon la direction haut et bas de véhicule et chevauche au moins une partie du capteur étanche (50) tandis que le véhicule est vu depuis le dessus.

13. Le véhicule à enfourcher selon l'une quelconque des revendications 1 à 12, **caractérisé par** un contrôleur (90) connecté au faisceau de câbles (60),
dans lequel le contrôleur (90) est configuré pour recevoir un signal du capteur étanche (50) pour exécuter une commande d'abaissement temporaire d'une puissance de sortie du moteur à combustion interne (7).

14. Le véhicule à enfourcher selon l'une quelconque des revendications 1 à 13, **caractérisé par** :
un arbre de pivotement (11) soutenu sur le cadre latéral (10) ; et
un arbre arrière (8) lié en pivotement au cadre latéral (10) avec l'arbre de pivotement (11) entre ceux-ci,
dans lequel le capteur étanche (50) est disposé en arrière par rapport à l'arbre de pivotement (11).

15. Le véhicule à enfourcher (1) selon l'une quelconque des revendications 1 à 14, **caractérisé en ce que** le capteur étanche (50) est configuré pour détecter uniquement une d'une contraction et extension de la tige de changement de vitesse (40).
